# EUROPÄISCHE PATENTANMELDUNG

(11) **EP 1 790 994 A1**
(43) Veröffentlichungstag der Anmeldung: **30.05.2007**
(21) Anmeldenummer: 05405657.7
(22) Anmeldetag: 23.11.2005
(51) Int. Cl.: G01S 13/04, G01S 13/536, G01S 13/56, G01S 13/58

(54) **Verfahren zum Auslösen eines Vorgangs infolge einer Bewegung, Anordnung mit einer Bewegungsermittlungsvorrichtung und diese selbst**

(71) Anmelder: Ascom (Schweiz) AG, 3000 Bern 14 (CH)
(72) Erfinder: Luethi, Erhard, 8634 Hombrechtikon (CH)
(74) Vertreter: Rüfenacht, Philipp Michael

(57) **Zusammenfassung**

Bei dem Verfahren zum Auslösen eines Vorgangs infolge einer Bewegung (11) eines Gegenstands (1), wird eine Sendestrahlung (5, 26) mit vorgegebener Trägerfrequenz ausgestrahlt, welche vom Gegenstand (1) infolge dessen Bewegung (11) mit veränderten Strahlungsparametern als Reflexionsstrahlung (9) reflektiert, detektiert und der Vorgang ausgelöst wird. Um einen Vorgang aufgrund der ermittelten Gegenstandsbewegung auszulösen bzw. zu verändern, wird lediglich der zur Bewegungsermittlung verwendeten Sendestrahlung eine Auslöseinformation aufgeprägt, mit der dann an einem entfernten Ort der entsprechende Vorgang ausgelöst wird.

## Beschreibung

### Technisches Gebiet

Die Erfindung betrifft ein Verfahren zum Auslösen eines Vorgangs infolge einer Bewegung eines Gegenstands gemäss dem Oberbegriff des Patentanspruchs 1, eine Bewegungsermittlungsvorrichtung gemäss dem Oberbegriff des Patentanspruchs 9 und eine Anordnung mit einer Bewegungsvorrichtung gemäss dem Oberbegriff des Patentanspruchs 13.

### Stand der Technik

Die Erfindung befasst sich mit einem Verfahren und einer Vorrichtung, welche unter das Schlagwort Radarsenor bzw. Radar-Bewegungsmelder fallen. Derartige Vorrichtungen und Verfahren werden u.a. an automatischen Schiebe-, Karussell-, Rundbogen- und Pendeltüren, Schnelllauftoren und Schrankenanlagen, automatischen sanitären Spülanlagen usw. verwendet. Sie können jedoch auch zur Kabinenvorraumkontrolle und als Wiederanlaufgeber bei Fahrtreppen eingesetzt werden. Die bekannten Bewegungsermittlungsvorrichtung obigen Prinzips sind kompliziert und aufwendig aufgebaut und damit teuer in ihrer Anschaffung und ihrem Unterhalt.

### Darstellung der Erfindung

### Aufgabe der Erfindung

Aufgabe der Erfindung ist es, ein Verfahren, eine Bewegungsermittlungsvorrichtung sowie eine Anlage mit einer Bewegungsvorrichtung zu schaffen, welche einfach und damit preisgünstig herstell- und wartbar ist. Die Erfindung befasst sich mit der Bewegung von Gegenständen, bei deren Bewegung vorzugsweise an einem von der Messung entfernten Ort etwas geschehen bzw. auslösen sollen. Der Ausdruck Gegenstand ist nicht allzu wörtlich zu nehmen. Es wird hierunter alles verstanden, was sich bewegen kann oder bewegt werden kann. Die Bewegungsvorrichtung soll also auch als Bewegungsmelder für sich bewegende Menschen und Tiere sowie für nicht lebende bewegte bzw. bewegbare Materie verwendbar sein.

### Lösung der Aufgabe

Die Aufgabe wird dadurch gelöst, dass beim erfindungsgemässen Verfahren zum Auslösen eines Vorgangs infolge einer Bewegung eines Gegenstands, eine Sendestrahlung ausgestrahlt wird, welche vom Gegenstand infolge dessen Bewegung mit veränderten Strahlungsparametern als Reflexionsstrahlung reflektiert wird. Diese Reflexionsstrahlung, welche Charakteristiken der Gegenstandsbewegung enthält, wird detektiert und, auf gegenüber der Sendestrahlung veränderte Strahlungsparameter untersucht. Wenn wenigstens ein unterschiedliches Charakteristikum ermittelt wird, wird eine Auslöseinformation ausgestrahlt, mit der dann ein entsprechender Vorgang ausgelöst werden kann. Die Einfachheit des Verfahrens ist nun darin begründet, dass für die Bewegungsermittlung und für die Übertragung des Bewegungsergebnisses ein und dieselbe Sendestrahlung verwendet wird; es wird eine Strahlung mit derselben Trägerfrequenz verwendet.

Die Sendestrahlung der Bewegungsermittlungsvorrichtung wird an einem ersten Ort ausgestrahlt. Bei der empfangenen Reflexionsstrahlung wird man vorzugsweise die durch die Bewegung veränderten Strahlungsparameter mit vorgegebenen Schwellenparametern verglichen; hierdurch lassen sich Fehlmessungen infolge von Rauschen oder nicht gewünschten Auslösungen durch Vögel, Kleintiere, herabfallende Blätter oder nicht zu beachtende Gegenstände eliminieren. Bei einer Abweichung wenigstens eines Parameters wird die Auslösinformation erzeugt. Bei den Parametern kann auch noch mit Bandbreiten gearbeitet werden. Die Auslöseinformation wird von einem gegenüber dem ersten entfernten, zweiten Ort leiten und worauf dann ein Vorgang am zweiten Ort entsprechend der Auslöseinformation ausgelöst, d.h. initiiert oder durchgeführt werden soll.

Wo sich der erste Ort befindet, hängt vom Einsatzgebiet ab. Handelt es sich z.B. um einen Wiederanlaufgeber bei einer Rolltreppe, so wird man die Sendestrahlung derart aussenden, dass sich einer noch stillstehenden Treppe annähernde Personen erfasst werden. Die Auslöseinformation wird dann an den zweiten Ort übertragen, der sich in der Nähe der Antriebsmotoren befindet. Einen Sendebereich zur Bewegungsermittlung und einen Sendebereich, welcher zur Übermittlung von Information an einen zweiten Ort verwendet wird, wird man vorzugsweise innerhalb eines Sendebereichs um eine einzige Sendeantenne ausbilden. Die Reichweite liegt typischerweise im Bereich von einigen Metern bis zu einigen zehn Metern. In der Regel wird für die Bewegungsermittlung eine kurze Reichweite benötigt und für die Informationsübertragung zu einem zweiten Ort eine noch kürzere Entfernung; es gibt jedoch auch Anwendungen, bei denen eine grössere Entfernung zu überbrücken ist. Eine Anwendung mit einer verhältnismässig grossen Distanz zum zweiten Ort kann sich beispielsweise bei einer Illuminationseinschattung, beim Einschalten von grossflächigen zu beleuchtenden Reklametafeln mit stillstehenden oder bewegten Anzeigen ergeben. Bei grösseren zu überbrückenden Entfernungen wird man bevorzugt eine Antenne verwenden, welche einen Halbraum mit kleinem Radius für die Bewegungsermittlung bestrahlt und eine Richtwirkung zum zweiten Ort hat. In diesen Fall kann dann immer mit ein und derselben Sendeleistung bei gleicher Trägerfrequenz gearbeitet werden.

Von der Bewegungsermittlungsvorrichtung kann nun bei Erreichen eines Bewegungsereignisses immer ein und dieselbe Auslöseinformation ausgesandt werden. Die Bewegungsermittlungsvorrichtung kann nun auch derart ausgebildet sein, d.h. ihr unten beschriebene Microcontroller derart programmiert sein, dass z.B. unterschiedliche Geschwindigkeitswerte der Bewegungen oder unterschiedliche Geschwindigkeitswertezusammensetzungen bzw. unterschiedliche Amplitudenhöhen der Reflexionsstrahlung (= eine unterschiedliche Anzahl bewegter Gegenstände) ermittelbar sind. Es lässt sich dann nämlich ermitteln, wieviele Gegenstände und wie schnell sie sich nähern. Eine derartige Information wäre z.B. bei Türöffnern wichtig, damit die Zeit für ein Offenstehen, erzeugt durch die Ausführungsvorrichtung, für eine jeweils unterschiedliche Anzahl Passanten richtig bemessen wird.

Es kann nun im Laufe der Zeit vorkommen, dass sich beispielsweise infolge von Alterung Parameter der Sendeleistung ändern oder generell andere Parameter bei der Bewegungsermittlung und bei der Informationsübermittlung an den zweiten entfernten Ort benötigt werden. Eine derartige Justage oder Parameteränderung kann nun durch eine Wartung bzw. Überholung der Bewegungsermittlungsvorrichtung vorgenommen werden. Da jedoch die Bewegungsermittlungsvorrichtung eine Empfangseinheit für eine von einem bewegten Gegenstand reflektierte Reflexionsstrahlung hat, kann nun von einen dritten beliebig entfernten Ort eine Sendestrahlung, welche dann eine entsprechende Codierung aufweist, welche, wie unten beschrieben, von der Bewegungsermittlungsvorrichtung auswertbar ist, zur Neueinstellung oder Verstellung von Sende- und/ oder Empfangsparametern, insbesondere von Schwellenparametern für die Detektion ausgesandt werden. Diese Informationsstrahlung hat dieselbe Trägerfrequenz wie die Sendestrahlung für die Bewegungsermittlung und wird in der Regel von einer Zentraleinheit ausgesandt und kann eine oder mehrere Bewegungsermittlungsvorrichtung betreffen.

Analog zur Justage oder Parameteränderungen bei Bewegungsermittlungsvorrichtungen kann auch eine entsprechende Änderung an einer Steuer- und Auslöseeinheit am zweiten Ort vorgenommen werden, wobei auch hier die Information mit einer Strahlung gleicher Trägerfrequenz vorgenommen wird.

Die ausgesandte Sendestrahlung zur Bewegungsermittlung wird unmoduliert, d.h. als cw- (contiunous wave)- Strahlung ausgesendet. Durch eine Reflexion an einem bewegten Gegenstand bzw. an einer Person ist nun bei der reflektierten Strahlung gegenüber der ausgesandten Strahlung die Amplitude, die Phase und die Momentanfrequenz verändert. Alle drei Eigenschaften können nun ausgewertet werden oder nur eine dieser Eigenschaften. Vorzugsweise wird man, wie unten beschrieben wird, die Momentanfrequenz ermitteln und auswerten.

Für die Bewegungsermittlung greift man je nach Landesstandart auf die für diesen Zweck freigegebenen Frequenzen, wie beispielsweise 433 MHz, 868 MHz, 915 MHz oder 2,4 GHz zurück. Aus diesen freigegebenen Frequenzbereichen wird nun einer ausgewählt und für die Bewegungsmessung verwendet. Eine Strahlung mit derselben Trägerfrequenz wird auch für eine Übermittlung einer Auslöseinformation zu einer an einem entfernten, zweiten Ort befindlichen Vorrichtung verwendet. Zur Übermittlung der entsprechenden Auslöseinformation wird der Sendestrahlung eine Amplitudenmodulation, eine Pulscodemodulation oder eine Frequenzmodulation während eines vorgegebenen Zeitabschnitts aufgeprägt.

Bei der Bewegungsermittlung wird eine Sendestrahlung mit einem sogenannten "Short Range Device" in einem der oben genannten Frequenzbänder unmoduliert erzeugt, ausgesandt und mit der empfangenen, von bewegten Gegenstand reflektierten Reflexionsstrahlung gemischt. Die hierbei erhaltenen Frequenzkomponenten, welche im Frequenzbereich der Bewegungsfrequenz des Gegenstands liegen, werden aufbereitet und als Auslöseinformation der Sendestrahlung als Amplitudenmodulation eine Pulscodemodulation, eine Frequenzmodulation oder ein moduliertes Signal mittels GFSK (Gaussian Frequency Shift Keying) aufgeprägt. Damit dieses der Trägerfrequenz aufmodulierte Signal der Auslöseinformation das schwache Signal in der Reflexionsstrahlung hervorgerufen durch die Gegenstandsbewegung nicht stört, kann das Signal der Auslöseinformation durch ein beispielsweises analoges Filter genügend unterdrückt werden.

Die Bewegungsermittlungsvorrichtung hat eine Sendeeinheit mit einer Sendeantenne. Die Sendeantenne dient nun einmal dazu einen vorgegebenen Raumbereich zu bestrahlen, in dem von einem bewegten Gegenstand dessen Bewegung, eventuell mit Richtung und Geschwindigkeit bzw. Geschwindigkeitsverteilung ermittelt werden soll. Es kann auch lediglich nur ermittelt werden, ob ein irgendwie bewegter Gegenstand vorhanden ist. Ferner dient die Sendeantenne dazu ein ermitteltes Bewegungssignal mit einer vorgegebenen Codierung an eine in der Regel entfernte Ausführungsvorrichtung zu senden, welche dann, wie oben bereits erwähnt, eine Beleuchtungsein- oder -ausschaltung, einen Wiederanlauf einer Rolltreppe usw. vornimmt. Die Empfangseinheit nimmt einmal das vom bewegten Gegenstand sowie auch von stillstehenden Gegenständen reflektierte Sendesignal als Reflexionsstrahlung auf. Ferner nimmt die Empfangseinheit auch Signale auf, welche, wie unten ausgeführt ist, zur Justage oder Änderungen von Parametern in der Bewegungsvorrichtung verwendet werden.

Da die vom bewegten Gegenstand reflektierte Reflexionsstrahlung eine bedeutend geringere Intensität verglichen mit der Sendestrahlung hat, müssen Massnahmen getroffen werden, um eine ausreichende Rauschunterdrückung und Diskrimierung zu erreichen. Hierzu werden einmal ausgehendes und hereinkommendes Signal gemischt und das Signal des Mischprodukts, welches bei Nichtvorhandensein eines bewegten Gegenstands ein Mischsignal 0 Hz ergibt und erst bei Auftreten eines bewegten Gegenstands eine von 0 Hz verschiedene Mischfrequenz ergibt, wird gefiltert und, wie unten ausgeführt, bearbeitet. Nach einer entsprechenden Bearbeitung wird eine Auslöseinformation abgerufen und über die Sendeeinheit versendet.

Die Bewegungsermittlungsvorrichtung ist in der Regel eine als Gerät ausgebildete Einheit für sich; sie kann jedoch in seltenen Fällen auch zusammen mit einer Ausführungsvorrichtung, welche dann die oben angeführten Initiierungen, Ein- oder Ausschaltungen vornimmt, angeordnet werden. In der Regel ist jedoch von einer Anordnung mit wenigstens einer Bewegungsermittlungsvorrichtung und wenigstens einer Ausführungsvorrichtung an voneinander getrennten Orten auszugehen, wobei beide Orte typischerweise einige Meter bis einige zehn Meter auseinander liegen können. Die beiden Orte müssen nicht in Sichtweite sein; sie können auch durch Wände oder Gegenstände voneinander getrennt sein. Gegenstände und Wände müssen jedoch mit Blick auf die verwendete Sendestrahlung derart sein, dass eine ausreichende Transmission noch gegeben ist.

Mehrere Bewegungsermittlungsvorrichtungen und nur eine Ausführungsvorrichtung wird man beispielsweise dann vornehmen, wenn mehrere Bewegungen an unterschiedlichen Orten einen einzigen Vorgang auslösen sollen. Es kann sich hier beispielsweise um eine ein- oder auszuschaltende Raumbeleuchtung, eine Einbruchssicherung, welche einen Alarm auslösen soll, um eine Raumüberwachung usw. handeln.

Es kann aber auch lediglich eine Bewegungsermittlungsvorrichtung auf mehrere Ausführungsvorrichtungen wirken, wie beispielsweise bei einer Einbruchsicherung, mit der einmal ein Alarm und eine von der Alarmeinheit entfernte Beleuchtung eingeschaltet werden soll.

Die Anordnung kann neben einer oder mehreren Ausführungsvorrichtungen eine an einem dritten Ort befindliche Zentraleinheit mit einer Sendeeinheit zum Aussenden einer Sendestrahlung und eine mit der Sendeeinheit verbundene Modulationseinheit aufweisen. Auch hier wird man eine Sendestrahlung mit derselben oben erwähnten Trägerfrequenz verwenden. Mit der Modulationseinheit ist dann der Sendestrahlung ein Informationssignal zur Veränderung eines oder mehrerer Parameter der Bewegungsermittlungsvorrichtung aufprägbar, wobei mit der Empfangseinheit die Sendestrahlung mit aufgeprägter Information empfangbar und demodulierbar ist und gemäss dem demodulierten Signal der Parameter einstellbar ist. Bei dem von der Zentraleinheit einzustellenden Parameter kann es sich nun um eine Einstellung der Detektionsempfindlichkeit handeln. Dies kann eine einmal vorzunehmende Justage bei der Installation sein. Eine von "extern" einzustellende Justage ist insbesondere dann von Vorteil, wenn die Bewegungsermittlungsvorrichtung an unzugänglichen Stellen angeordnet ist, um sie vor Vandalenakten zu schützen. Es kann sich aber auch um eine Nachjustierung von mehreren Ausführungsvorrichtungen zusammen handeln, wenn sich herausstellen sollte, dass eine einmal eingestellte Empfindlichkeit sich als nicht zweckmässig erwiesen hat

Ausgehend von der Zentraleinheit der Anordnung wird man bei Ausführungsvorrichtungen analog zur Ausbildung mit Blick auf eine einstellbare Bewegungsermittlungsvorrichtung ebenfalls veränderbare Vorgangsparameter vorsehen. Als Vorgangsparameter ist beispielsweise die Schwenkgeschwindigkeit bei einem auf Annäherung arbeitenden Türöffner, der Wasserfluss bei automatischen Pissoirs, eine Helligkeitseinstellung bei einer Beleuchtung usw. anzusehen.

Die Bewegungsermittlungsvorrichtungen oder die Ausführungsvorrichtungen können einen Datenspeicher aufweisen, in dem Bewegungsparameter zeitlich, insbesondere maximale und/oder minimale Bewegungsparameter, abspeicherbar sind. Mit einer derartigen Anordnung können beispielsweise Erschütterungen von Transportgütern ermittelt und abgespeichert werden. Die derart abgespeicherten Informationen können zu einem späteren Zeitpunkt, in der Regel am Transportende durch einen Sendebefehl der ein Auslösen bewirkt, empfangen werden.

Es können nicht nur Meldungen bei ermittelten Bewegungen erfolgen; es kann auch eine Meldung erfolgen, wenn keine Bewegung mehr vorhanden ist. Eine derartige Anordnung kann dann zum Erfassen von Gegenstandsbewegungen auf einem Transportband dienen, wobei eine Meldung abgegeben wird, sofern das Förderband stillsteht oder keine Gegenstände mehr transportiert werden.

Eine analoge Ausbildung kann z.B. bei Baustellen auf Strassenabschnitten installiert werden. Man wird dann mehrere Bewegungsermittlungsvorrichtungen entlang des Bauabschnittes bzw. bereits auch vor dem Bauabschnitt anordnen und sobald keine Bewegung mehr ermittelt wird, eine entsprechende Ampelsteuerung für die Gegenrichtung oder eine andere Fahrtrichtung vornehmen. Rotphasen können hiermit auf ein Minimum beschränkt werden.

Auch können Schwingungen und Vibrationen an Maschinen und Motoren ermittelt werden, welche dann an die entsprechende Ausführungsvorrichtung oder auch an die Zentraleinheit funktechnisch übertragen werden. Je nach ermitteltem Ergebnis kann dann auf einen Stillstand oder eine fehlerhaft laufende Maschine bzw. Motor geschlossen werden.

Weitere Ausführungsvariationen zur Erfindung und deren Vorteile ergeben sich aus dem nachfolgenden Text.

### Kurze Beschreibung der Zeichnungen

Nachfolgend werden Beispiele der erfindungsgemässen Verfahrens, der Bewegungsermittlungsvorrichtung und einer Anordnung mit einer Bewegungsermittlungsvorrichtung anhand von Zeichnungen näher erläutert. Es zeigen:
Fig. 1 ein Blockschaltbild einer Ausführungsvariante der erfindungsgemässen Bewegungsermittlungsvorrichtung und
Fig. 2 eine beispielsweise hardwaremässige Verwirklichung der in Figur 1 dargestellten Bewegungsermittlungsvorrichtung.

### Wege zur Ausführung der Erfindung

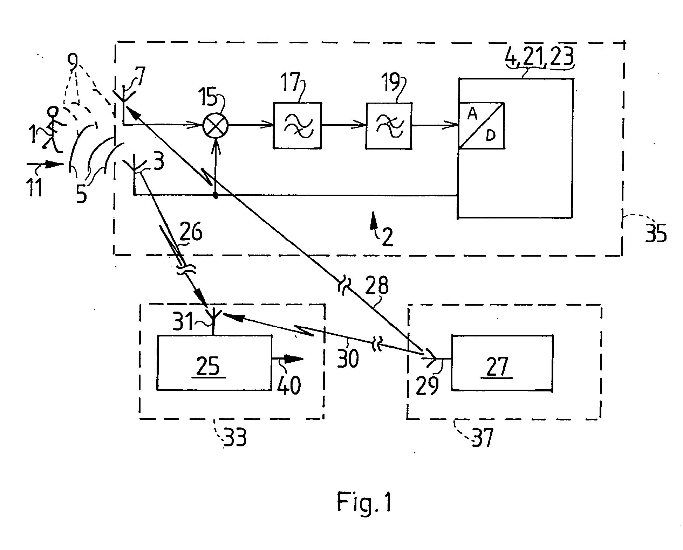

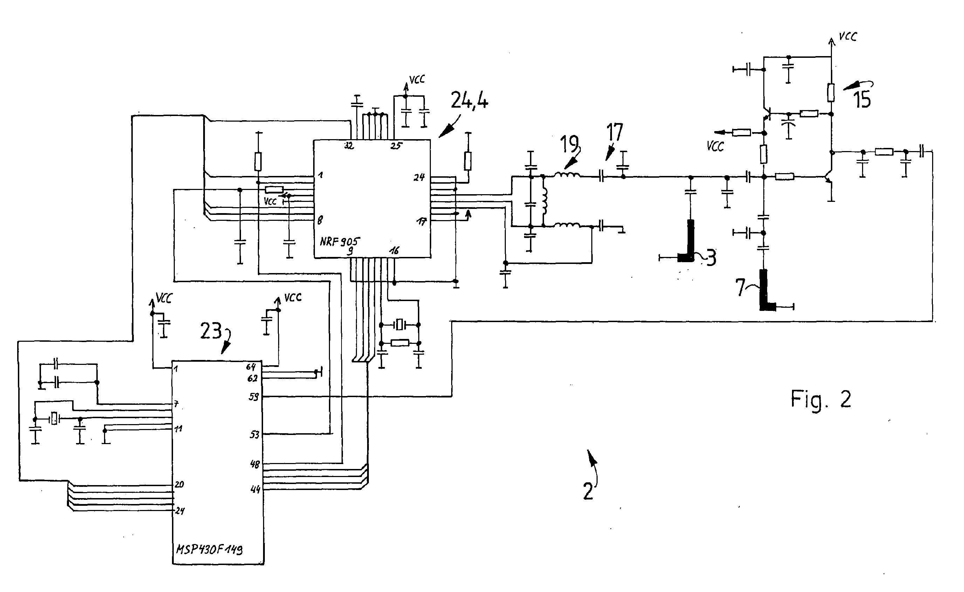

Eine in **Figur 1** in einem Blockschaltbild dargestellte Ausführungsvariante einer erfindungsgemässen Bewegungsermittlungsvorrichtung **2** zur Ermittlung einer Bewegung eines Gegenstands, hier einer Person **1,** hat eine Sendeeinheit **4** mit einer Sendeantenne **3** zum Aussenden einer hier symbolisch gezeichneten Sendestrahlung **5** sowie eine Empfangseinheit mit einer Empfangsantenne **7** zum Empfang einer von Gegenstand **1** reflektierten, hier ebenfalls nur symbolisch gestrichelt dargestellten Reflexionsstrahlung **9.** Die Strahlungsparameter der Reflexionsstrahlung **9** ändern sich infolge der durch einen Richtungspfeil **11** angedeuteten Gegenstandsbewegung. Die Bewegungsermittlungsvorrichtung **2** hat eine Auswerteeinheit, bestehend aus einem in **Figur 2** dargestellten Analog-Digital-Wandler **21** und dem Microcontroller **23.** Die Auswerteeinheit ist signalmässig sowohl mit der Sende- wie mit der Empfangseinheit verbunden. Mit der Auswerteeinheit ist wenigstens ein durch die Bewegung **11** veränderter Strahlungsparameter der Reflexionsstrahlung **9** ermittelbar. Bei einer Ermittlung ist dann über die Sendeantenne **3** der Sendeeinheit eine Auslöseinformation mit derselben Sendestrahlung (=gleiche Trägerfrequenz) aussendbar.

Die Sendeeinheit **4** ist in **Figur 2** im Detail dargestellt. Das zur Sendeantenne **3** geführte Sendesignal arbeitet bei der Bewegungsermittlung mit einer konstanten Trägerfrequenz je nach Einsatzgebiet von beispielsweise, wie bereits eingangs ausgeführt, mit 433 MHz, 868 MHz, 915 MHz oder 2,4 GHz. Ein Teil des Sendesignals wird auf einen Mischer **15** geführt. Die Reflexionsstrahlung **9** hat gegenüber der Sendestrahlung **5** je nach Reflexionsfaktor eine verringerte Amplitude, eine Phasenverschiebung aufgrund der Laufzeit und aufgrund der Bewegung eine veränderte Momentanfrequenz f ± Δf_{D}, wobei f die Trägerfrequenz und Δf_{D} die Dopplerfrequenz ist. Das mit der Empfangsantenne **7** empfangene Reflexionssignal **9** wird ebenfalls auf den Mischer **15** gegeben. Hat keine Bewegung statt gefunden, sind die Frequenzen von Sendestrahlung und Empfangsstrahlung gleich. Hat eine Bewegung des Gegenstands 1 stattgefunden, so ist die Frequenz der Reflexionsstrahlung erhöht, falls eine Bewegung auf die Bewegungsermittlungsvorrichtung **2** hin und erniedrigt wenn eine Bewegung von ihr weg statt gefunden hat. Durch eine Mischung der elektrischen Signale der gesendeten und der empfangenen Strahlung entstehen somit am Ausgang des Mischers **15** Frequenzkomponenten, welche im Frequenzbereich der "Bewegungsfrequenz" des Gegenstands **1** liegen. Werden solche Frequenzkomponenten mit ausreichender Intensität, während einer ausreichend langen Zeitdauer ermittelt, lässt sich auf einen bewegten Gegenstand **1** im Sendebereich der beiden Antennen **3** und **7** schliessen. Mit einer Filterung durch Verwendung eines Hochpasses **17** und eines Tiefpasses **19** am Ausgang des Mischers **15** wird der interessierende Frequenzbereich hervorgehoben. Das derart gefilterte Signal wird mit einem Analog-Digital-Wandler digitalisiert, welches dann mit einem in **Figur 2** gezeigten Microcontroller **23** weiter verarbeitet wird. Die digitale Signalverarbeitung wird in Form eines programmierten Algorithmus, also mit Software realisiert und kann eine weitere ggf. adaptive Filterung, eine Frequenzanalyse (Fast Fourier Transformation), eine Störungsaustastung usw. umfassen.

Sind vom Microcontroller **23** ausreichend Merkmale für einen bewegten Gegenstand **1** im Sendebereich ermittelt worden, liegt ein so genanntes Ereignis vor. Beim Vorliegen des Ereignisses wird je nach Ausbildung einer entfernten Ausführungsvorrichtung **25** an einem zweiten Ort **33** dem Sendesignal der Sendestrahlung **5,** welche hier zur besseren Kennzeichnung das Bezugszeichen **26** gegeben ist, eine Amplitudenmodulation, eine Pulscodemodulation oder eine Frequenzmodulation aufgeprägt und über die Sendeantenne **3** ausgesendet und von einer Empfangseinheit der Ausführungsvorrichtung **25** empfangen und ein entsprechendes elektrisches Signal (symbolisch als "40" gekennzeichnet) erzeugt und mit diesem ein Vorgang aus gelöst. Je nach Entfernung zwischen Bewegungsermittlungsvorrichtung **2** an einem ersten Ort **35** und der Ausführungsvorrichtung **25** am zweiten Ort **33** kann nun die Sendeantenne **3** als Raumstrahler oder als Raumstrahler mit einer bevorzugten Ausstrahlungsrichtung in den Bereich einer zu erwartenden Gegenstandsbewegung und einer Richtkeule zur Ausführungsvorrichtung **25** ausgebildet werden. Um die Bewegungsermittlungsvorrichtung **2** preisgünstig gestalten zu können, soll nämlich eine möglichst geringe Sendeleistung verwendet werden, welche auch für eine Informationsübermittlung an eine Ausführungsvorrichtung nicht erhöht werden sollte. Es funktioniert alles mit ein und derselben Trägerfrequenz und vorzugsweise mit ein und derselben Sendeleistung.

So wie die Ausführungsvorrichtung **25** über eine Sendestrahlung **26 (=5)** mit der vorgegebenen Trägerfrequenz Informationen empfangen kann, kann auch in einer bevorzugten Ausführungsvariante die Bewegungsermittlungsvorrichtung **2** über eine Strahlung **28 (= 26, 5)** mit gleicher Trägerfrequenz wie die eigene Sendestrahlung **5** mit ihrer Empfangsantenne **7** Informationen von einer in **Figur 1** angedeuteten, räumlich entfernten, an einem dritten Ort **37** befindlichen Zentraleinheit **27** empfangen. Analog kann auch die Ausführungsvorrichtung **25** derartige Informationen von der eine Sendeeinheit **29** aufweisende Zentraleinheit **27** über eine Sendestrahlung **30 (=5, 26, 28)** mit derselben vorgegebenen Trägerfrequenz empfangen. Mit diesen Informationen können nun beispielsweise Detektionsschwellen bei der Bewegungsermittlungsvorrichtung **2** verändert werden und für die Ausführungsvorrichtung **25** Einstellungsparameter für zu steuernde Mittel übertragen werden. Auch können abgespeicherte Daten abgerufen werden.

In **Figur 2** ist eine Bewegungsermittlungsvorrichtung **2** in einer beispielsweisen Hardwarekonfiguration dargestellt, wobei die Bezugszeichen auf oben beschriebene, in **Figur 1** blockartige dargestellte Elementsteine sich beziehen.

## Patentansprüche

1. Verfahren zum Auslösen eines Vorgangs infolge einer Bewegung **(11)** eines Gegenstands **(1),** wobei eine Sendestrahlung **(5, 26)** mit vorgegebener Trägerfrequenz ausgestrahlt wird, welche vom Gegenstand **(1)** infolge dessen Bewegung **(11)** mit veränderten Strahlungsparametern als Reflexionsstrahlung **(9)** reflektiert, detektiert und der Vorgang ausgelöst wird, **dadurch gekennzeichnet, dass** die Sendestrahlung **(5, 26)** mit derselben Trägerfrequenz nach Ermittlung wenigstens eines veränderten Strahlungsparameters der Reflexionsstrahlung als Auslöseinformation ausgestrahlt wird.

2. Verfahren nach Anspruch 1, **dadurch gekennzeichnet, dass** die Sendestrahlung **(5, 26)** mit der vorgegebenen Trägerfrequenz an einem ersten Ort **(35)** ausgestrahlt wird, die durch die Bewegung veränderten Strahlungsparameter der Reflexionsstrahlung **(9)** mit vorgegebenen Parametern, insbesondere Schwellenparametern, verglichen werden und bei Über- oder Unterschreiten wenigstens eines Strahlungsparameters in Bezug auf wenigstens einen vorgegebenen Parameter die Auslösinformation erzeugt wird, die Auslöseinformation am vom ersten entfernten, zweiten Ort **(33)** empfangen und der Vorgang am zweiten Ort **(33)** entsprechend der Auslöseinformation ausgelöst, d. h. initiiert oder durchgeführt wird.

3. Verfahren nach Anspruch 2, **dadurch gekennzeichnet, dass** von einem dritten Ort **(37),** vorzugsweise dieselbe, Sendestrahlung **(28)** mit derselben Trägerfrequenz und mit einer ersten aufgeprägten Einstellinformation ausgesendet, diese informationstragende Strahlung **(28)** am ersten Ort **(35)** detektiert und wenigstens einer der Parameter geändert wird.

4. Verfahren nach Anspruch 2, **dadurch gekennzeichnet, dass** von einem dritten Ort **(37),** vorzugsweise dieselbe Sendestrahlung **(30)** mit derselben Trägerfrequenz und mit einer aufgeprägten zweiten Einstellinformation ausgesendet, diese informationstragende Strahlung **(30)** am zweiten Ort **(33)** empfangen und Vorgangsparameter entsprechend der Einstellinformation geändert werden.

5. Verfahren nach einem der Ansprüche 1 bis 4, **dadurch gekennzeichnet, dass** die ausgesandte Sendestrahlung **(5)** zur Bewegungsermittlung unmoduliert ausgesendet wird.

6. Verfahren nach einem der Ansprüche 1 bis 5, **dadurch gekennzeichnet, dass** die Strahlung **(26)** mit der Auslöseinformation während eines vorgegeben Zeitabschnitts eine Amplitudenmodulation, vorzugsweise eine Pulscodemodulation hat.

7. Verfahren nach einem der Ansprüche 1 bis 6, **dadurch gekennzeichnet, dass** die Strahlung **(26)** mit der Auslösinformation während eines vorgegeben Zeitabschnitts moduliert ist, insbesondere mit einer Frequenzmodulation versehen wird, deren Frequenzbereich sich eindeutig von einer Frequenzverschiebung hervorgerufen durch die Gegenstandsbewegung **(11)** unterscheidet, oder vorzugsweise eine GFSK (Gaussion Frequency Shift Keying)-Modulation vorgenommen wird, wobei die für die Auslöseinformation verwendete Modulation durch Filterung vom Signal des veränderten Strahlungsparameters der Reflexionsstrahlung ferngehalten wird.

8. Verfahren nach einem der Ansprüche 1 bis 7, **dadurch gekennzeichnet, dass** die Sendestrahlung **(5, 26)** mit einem sogenannten Short Range Device **(4)** mit einer vorzugsweisen Trägerfrequenz von 433 MHz, 868 MHz, 915 MHz oder 2,4 GHz unmoduliert erzeugt, ausgesandt und mit der empfangenen Reflexionsstrahlung **(9)** gemischt wird, wobei ein bewegter Gegenstand **(1)** Amplitude, Phase und Momentanfrequenz der Reflexionsstrahlung **(9)** beeinflusst und beim Mischen dann Frequenzkomponenten gebildet werden, welche im Frequenzbereich der Bewegungsfrequenz des Gegenstands **(1)** liegen, sowie diese Frequenzkomponenten aufbereitet und als Auslöseinformation der Sendestrahlung **(5, 26)** aufgeprägt werden.

9. Bewegungsermittlungsvorrichtung **(2)** zur Verwendung einer Auslösung eines Vorgangs infolge einer Bewegung **(11)** eines Gegenstands **(1)** mit einer Sendeeinheit **(3, 4)** zum Aussenden einer Sendestrahlung **(5, 26)** mit einer vorgegebenen Trägerfrequenz, einer Empfangseinheit **(7)** zum Empfang einer von Gegenstand **(1)** reflektierten Reflexionsstrahlung **(9),** deren Strahlungsparameter infolge der Gegenstandsbewegung **(11)** veränderbar sind, **gekennzeichnet durch** eine Auswerteeinheit **(21, 23),** welche signalmässig sowohl mit der Sende- wie mit der Empfangseinheit **(3, 4, 7)** verbunden ist, wobei mit der Auswerteeinheit **(21, 23)** wenigstens ein **durch** die Bewegung veränderter Strahlungsparameter der Reflexionsstrahlung **(9)** ermittelbar ist, und bei Ermittlung über die Sendeeinheit **(4, 3)** eine Auslöseinformation mit derselben Sendestrahlung **(5, 26)** mit derselben Trägerfrequenz aussendbar ist.

10. Bewegungsermittlungsvorrichtung **(2)** nach Anspruch 9, **gekennzeichnet durch** eine Diskriminationseinheit, mit der die **durch** die Bewegung **(11)** veränderten Strahlungsparameter mit vorgegebenen Schwellenparametern vergleichbar, bei Abweichung wenigstens eines Parameters die Auslöseinformation erzeugbar und über die Sendeeinheit **(4, 3)** aussendbar ist.

11. Bewegungsermittlungsvorrichtung **(2)** nach Anspruch 9 oder 10, **gekennzeichnet durch** eine Modulationseinheit, mit der der Sendestrahlung **(5, 26)** die Auslöseinformation als Amplitudenmodulation, insbesondere als Pulscodemodulation, vorzugsweise als Frequenzmodulation, vor allem als GFSK-Modulation aufprägbar ist, und **durch** eine Filtereinheit, mit der vom **durch** die Bewegung des Gegenstands **(1)** veränderten Strahlungsparameter bei der Reflexionsstrahlung die die Auslöseinformation betreffende Modulation fernhaltbar ist.

12. Bewegungsermittlungsvorrichtung **(2)** nach Anspruch 9 oder 11, **gekennzeichnet durch** eine Sende- und eine Empfangsantenne **(3, 7),** einen mit der Sende- und der Empfangsantenne **(3, 7)** verbundenen Mischer **(15),** eine mit dem Mischer **(15)** verbundene Filtereinheit **(17, 19)** sowie eine mit der Sendeantenne **(3)** und der Filtereinheit **(17, 19)** verbundene Auswerteeinheit **(21, 23).**

13. Anordnung mit einer Bewegungsermittlungsvorrichtung **(2)** an einem ersten Ort **(35)** zur Feststellung einer Bewegung eines Gegenstands **(1)** und wenigstens einer Ausführungsvorrichtung **(25)** am einem zweiten Ort **(33)** zur Initiierung oder Durchführung wenigstens eines Vorgangs in Abhängigkeit einer von der Bewegungsermittlungsvorrichtung **(2)** ermittelbaren Bewegung **(11),** wobei die Bewegungsermittlungsvorrichtung **(2)** eine Sendeeinheit **(3, 4)** zum Aussenden einer Sendestrahlung **(5, 26)** und eine Empfangseinheit **(7)** zum Empfang einer von Gegenstand **(1)** in Folge dessen Bewegung **(11)** mit veränderten Strahlungsparametern reflektierten Reflexionsstrahlung **(9)** hat, die Bewegungsermittlungsvorrichtung **(2)** eine Auswerteeinheit **(21, 23)** hat, mit der wenigstens einer der veränderten Strahlungsparameter der Reflexionsstrahlung **(9)** ermittelbar und ein Auslösesignal erzeugbar ist, mit dem mittels der am zweiten Ort **(33)** befindlichen Ausführungsvorrichtung **(25)** ein Vorgang auslösbar ist, **dadurch gekennzeichnet, dass** das Auslösesignal der zur Bewegungsermittlung verwendbaren Sendestrahlung **(5, 26)** aufprägbar, von der Ausführungsvorrichtung **(25)** empfangbar und für die Vorgangsauslösung auswertbar ist.

14. Anordnung nach Anspruch 13, **gekennzeichnet durch** eine an einem dritten Ort **(37)** befindliche Zentraleinheit **(27)** mit einer Sendeeinheit **(29)** zum Aussenden einer weiteren Sendestrahlung **(28, 30),** welche dieselbe Trägerfrequenz wie die Sendestrahlung **(5, 26)** der Bewegungsermittlungsvorrichtung **(2)** hat, dieser weiteren Sendestrahlung **(28)** ein Informationssignal zur Veränderung eines Empfangsparameters für die Bewegungsermittlung der Bewegungsermittlungsvorrichtung **(2)** aufprägbar ist, und diese weitere Sendestrahlung von der Bewegungsermittlungsvorrichtung **(2)** empfang- und verarbeitbar ist.

15. Anordnung nach Anspruch 13 oder 14, **gekennzeichnet durch** eine an einem dritten Ort **(37)** befindliche Zentraleinheit **(27)** mit einer Sendeeinheit **(29)** zum Aussenden einer weiteren Sendestrahlung **(28, 30),** welche dieselbe Trägerfrequenz wie die Sendestrahlung **(5, 26)** der Bewegungsermittlungsvorrichtung **(2)** hat, dieser weiteren Sendestrahlung **(30)** ein Einstellsignal zur Veränderung eines Vorgangsparameters der Ausführungsvorrichtung **(25)** aufprägbar ist, und diese weitere Sendestrahlung von der Ausführungsvorrichtung **(25)** empfang- und verarbeitbar ist.

16. Anordnung nach einem der Ansprüche 13 bis 15, **gekennzeichnet durch** mehrere in einem Raum angeordnete Bewegungsermittlungsvorrichtungen, deren Auslösesignale von wenigstens einer der Ausführungsvorrichtungen zur Raumüberwachung auswertbar sind, in dem die Bewegungsermittlungsvorrichtungen angeordnet sind, wobei von allen Bewegungsermittlungsvorrichtungen eine Sendestrahlung mit ein- und derselben Trägerfrequenz aussendbar ist.

17. Anordnung nach einem der Ansprüche 13 bis 16, **dadurch gekennzeichnet, dass** die Bewegungsermittlungsvorrichtung oder die Ausführungsvorrichtung einen Speicher hat, in dem Bewegungsparameter zeitlich, insbesondere maximale und/oder minimale Bewegungsparameter, abspeicherbar sind.
